# DEMANDE DE BREVET EUROPEEN

(11) **EP 2 687 431 A1**
(43) Date de publication de la demande: **22.01.2014**
(21) Numéro de dépôt: 12177194.3
(22) Date de dépôt: 19.07.2012
(51) Int. Cl.: B62J 11/00, A47G 25/02

(54) **Accessoire de bicyclette pour suspendre un vêtement**

(71) Demandeur: Cabossa Groupe, 75016 Paris (FR)
(72) Inventeur: de Tilly, Patrice, 75017 PARIS (FR)

(57) **Abrégé**

Il s'agit d'un accessoire de bicyclette pour suspendre un vêtement sur une bicyclette. L'accessoire (1) de bicyclette comprend un moyen de fixation (2) pour fixer ledit accessoire (1) à ladite bicyclette, ledit moyen de fixation (2) étant solidiaire d'au moins une tige (3) laquelle forme un moyen pour suspendre un vêtement, caractérisé en ce que ledit moyen de fixation (2) est destiné à être fixé à l'arrière de la bicyclette,

## Description

### Domaine technique

Est ici concerné un accessoire de bicyclette. Plus précisément, il s'agit d'un accessoire de bicyclette pour suspendre un vêtement sur une bicyclette.

### Etat de la technique

Dans le domaine, on connaît déjà un accessoire de bicyclette comprenant un moyen de fixation pour fixer ledit accessoire à ladite bicyclette, ledit moyen de fixation étant solidaire d'au moins une tige, laquelle forme un moyen pour suspendre un vêtement.

Un tel accessoire de bicyclette est divulgué dans CN86202986.

Cet accessoire peut être utilisé comme simple moyen pour suspendre un vêtement, par exemple afin de le sécher suite à une averse; il est également utilisé en tant que simple moyen d'accorche.

Etant fixé à l'avant de la bicyclette, un vêtement suspendu à l'avant de la bicyclette ne permet pas de circuler normalement sur la bicylette. Un tel accessoire gênerait considérablement la manipulation de la bicyclette par le cycliste. Plus précisément, il apparaît que la suspension du vêtement à l'avant de la bicyclette génère un encombrement à l'avant de la bicyclette ce qui est particulièrement inconfortable pour un cycliste; cet accessoire n'étant nullement prévu pour porter un vêtement en phase de roulage, le cycliste verrait son vêtement se coincer de manière intempestive entre les rayons de la roue, entre la roue et la fourche, entre la roue et le cadre de la bicyclette etc.. En outre, cela pourrait affecter le champ de vision du cycliste puisque le vêtement serait suspendu à l'avant du véhicule. En conséquence, l'utilisation d'un tel accessoire pour suspendre un vêtement est inadapté à une phase de roulement de la bicyclette.

Dans ce contexte, la problème ici posé est de réaliser un accessoire de bicyclette, qui soit de construction simple et permettant, en phase de roulage de la bicyclette, de transporter un vêtement sans le froisser tout en conservant un champ de vision dégagé et sans que le vêtement n'enraye le fonctionnement d'un des organes de la bicyclette.

La solution proposée par la présente invention est que le moyen de fixation est destiné à être fixé à l'arrière de la bicyclette.

En phase d'utilisation, c'est-à-dire lorsque la bicyclette est en phase de roulage, une telle solution permet de pallier les inconvénients précités à savoir : libérer le champ de vision du cycliste en phase de roulage, empêcher d'enrayer le fonctionnement des différents organes de la bicyclette et assurer le bon confort du cycliste par rapport à la manipulation de la bicyclette et de la position du cycliste sur la bicyclette.

Dans un mode de réalisation, le moyen de fixation serait destiné à coopérer avec un tube de selle.

Dans un autre mode de réalisation, le moyen de fixation serait destiné à coopérer avec un porte-bagage.

Dans un autre mode de réalisation, le moyen de fixation serait destiné à coopérer avec un essieu arrière.

La fixation du présent accessoire sur le tube de selle, sur le porte-bagage, ou sur l'essieu de la roue arrière permet avantageusement de s'intégrer sur un organe standard de la bicyclette. En outre, la fixation du tube sur la selle, sur le porte-baggage ou sur l'essieu arrière, de préférence de sorte que la tige se projette vers l'arrière de la bicyclette, permet de ne pas gêner le cycliste et d'éviter que l'accessoire ne vienne frotter contre le dos du cycliste, ce qui le gênerait en phase de roulage. Dans un autre mode particulier de réalisation, la tige comprendrait:
- une première portion comportant une extrémité proximale adjacente au moyen de fixation et une extrémité distale distante du moyen de fixation, lesdites extrémités proximale et distale étant distantes l'une de l'autre d'une longueur au moins égale à 250 mm,
- une deuxième portion comportant une première extrémité liée à ladite extrémité distale et une deuxième extrémité opposée à la première, ladite deuxième portion s'étendant tout ou en partie perpendiculairement et verticalement par rapport à ladite première portion sur une hauteur au moins égale à 300 mm,
- une troisième portion comportant une troisième extrémité liée à la deuxième extrémité et une quatrième extrémité définissant l'extrémité terminale de ladite tige.

De cette manière, la première portion permet de proposer un encombrement suffisant au cycliste pour qu'il puisse s'assoir confortablement sans que l'accessoire ne vienne frotter contre son dos. En phase de roulage, cette projection horizontale vers l'arrière de la bicyclette a essentiellement pour objectif le confort du cycliste. La seconde portion qui s'étend verticalement, permet avantageusement de projeter verticalement et vers le haut la troisième portion qui définit une forme de cintre ou un support pour poser un cintre; ainsi, lorsqu'un vêtement est suspendu au voisinage de la troisième portion ou sur la troisième portion, ledit vêtement est mis à l'écart de la roue, du cadre, du pédalier, du dérailleur, et de tous les éléments constitutifs de la bicyclette pouvant entrainer une dégradation au vêtement. En outre, la géométrie combinée des première, deuxième et troisième portions, permet de maintenir le vêtement dans une position stable et verticale sur un support prévu à cet effet (par exemple un cintre), ce qui permet d'avoir un vêtement non froissé.

Dans un autre mode particulier de réalisation, la tige comprendrait:
- une première portion comportant une extrémité proximale adjacente au moyen de fixation et une extrémité distale distante du moyen de fixation, lesdites extrémités proximale et distale étant distantes l'une de l'autre d'une longueur au moins égale à 300 mm,
- une troisième portion comportant une troisième extrémité liée à l'extrémité distale et une quatrième extrémité définissant l'extrémité terminale de ladite tige, la troisième portion définissant ladite forme de cintre.

La première portion qui s'étend verticalement, permet avantageusement de projeter verticalement et vers le haut la troisième portion qui définit une forme de cintre ou un support pour poser un cintre; ainsi, lorsqu'un vêtement est suspendu au voisinage de la troisième portion ou sur la troisième portion, ledit vêtement est mis à l'écart de la roue, du cadre, du pédalier, du dérailleur, et de tous les éléments constitutifs de la bicyclette pouvant entrainer une dégradation au vêtement. En outre, la géométrie combinée des première et troisième portions, permet de maintenir le vêtement dans une position stable et verticale sur un support prévu à cet effet (par exemple un cintre), ce qui permet d'avoir un vêtement non froissé.

Dans un autre mode de réalisation, la troisième portion définirait ladite forme de cintre.

Suivant une autre variante, la première portion serait télescopique pour faire varier ladite longueur.

Cette solution est avantageuse en ce qu'elle permet de régler la longueur selon laquelle le présent accessoire est projeté vers l'arrière de la bicyclette. De cette manière, ce réglage peut s'opérer en fonction de la géométrie de la bicyclette combinée aux caractéristiques physiques du cycliste, et de la position du cintre a priori à l'endroit de la troisième portion. En outre, un tel moyen de réglage peut également être utile en ce qu'un cycliste peut, par exemple, allonger la première portion lorsqu'il souhaite porter un sac à dos.

Suivant un autre mode de réalisation, la deuxième portion serait télescopique pour faire varier ladite hauteur.

Le réglage de la deuxième portion est utile en ce qui permet de faire varier la hauteur en fonction de la géométrie de la bicyclette combinée aux dimensions du vêtement à suspendre. A titre d'exemple, un long manteau nécessitera un encombrement vertical supérieur à celui nécessaire pour un vêtement plus court du type gilet.

Dans un autre mode de réalisation de l'invention:
- la deuxième portion comprendrait au moins un premier et un second éléments articulés entre eux par un premier moyen de rotation, ledit premier moyen de rotation étant situé sensiblement au centre de ladite deuxième portion,
- lesdites deuxième et troisième portion seraient articulés entre elles par un second moyen de rotation, à l'endroit des deuxième et troisième extrémités.

Ce mode de réalisation décrivant un accessoire articulé permet en outre d'être rétracté ou déployé. En position déployée, l'accessoire occupe sa fonction comme mentionné ci-avant dans la description. En position retractée, les portions sont repliées à l'endroit des moyens de rotation, ce qui permet de réduire l'encombrement de l'accessoire lorsqu'il n'est pas utilisé - ce peut donc avoir des avantages liés à l'encombrement disponible à l'arrière ou à l'esthétique.

Suivant une autre variante, la tige secondaire serait agencée entre lesdites première et deuxième portions, ladite tige secondaire formant alors un angle sensiblement égale à 45° avec la première portion d'une part et la deuxième portion d'autre part.

La tige secondaire a une double fonction : renforcer les propriétés mécaniques de résistance au choc ou à la fatigue et proposer un moyen pour empêcher le vol de l'accessoire. Plus précisément, un cable antivol peut être inséré entre la tige considérée comme principale et la tige secondaire de sorte à être lié avec l'ensemble de la bicyclette lorsque la bicyclette est en état de stationnement.

Dans un autre mode de réalisation, la tige serait liée amoviblement au moyen de fixation.

Une telle caractéristique offre la possibilité au cycliste de retirer la tige simplement et rapidement, quand il ne souhaite pas s'en servir.

### Brève description des figures

D'autres caractéristiques et avantages ressortiront encore de la description qui est faite ci-après, à titre indicatif et nullement limitatif, en référence aux dessins annexés, dans lesquels :
- la figure 1 montre une vue en perspective d'un premier exemple de l'accessoire de bicyclette, lequel est destiné à être fixé à un tube de selle;
- la figure 2 montre une vue en perspective d'un deuxième exemple de l'accessoire de bicyclette, lequel est destiné à être fixé à un tube de selle;
- la figure 3 montre une vue en perspective d'un troisième exemple de l'accessoire de bicyclette, lequel est destiné à être fixé à un tube de selle;
- la figure 4 montre une vue en perspective d'un quatrième exemple de l'accessoire de bicyclette, lequel est destiné à être fixé à un tube de selle;
- la figure 5 montre une vue en perspective d'un cinquième exemple de l'accessoire de bicyclette, lequel est articulé et destiné à être fixé à un tube de selle;
- la figure 6 montre une vue en perspective d'un sixième exemple de l'accessoire de bicyclette, lequel est destiné à être fixé au porte-bagage ou à un essieu arrière;
- la figure 7 montre une photographie d'un moyen pour maintenir les tubes en position déployée ou retracté dans le cas où une portion de l'accessoire est télescopique.

### Description de l'invention

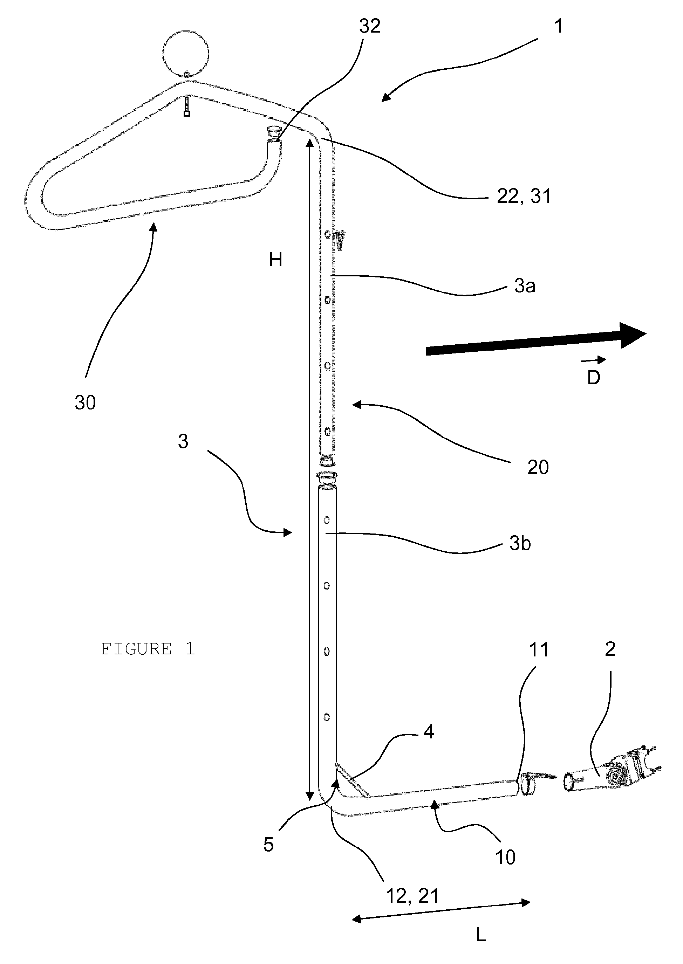

Est montré sur les figures 1 à 6 un accessoire 1 de bicyclette comprenant un moyen de fixation 2 pour fixer ledit accessoire 1 à ladite bicyclette. Le moyen de fixation 2 est solidaire d'au moins une tige 3 laquelle forme un moyen pour suspendre un vêtement.

En outre, le moyen est destiné à être fixé à l'arrière de la bicyclette.

Suivant un mode de réalisation, le moyen de fixation 2 est destiné à coopérer avec un tube de selle (figures 1 à 5). Le moyen de fixation 2 peut consister en un moyen déjà utilisé - par exemple sur des porte-bagages existants - consistant en un collier ou un tube coulissant sur le tube de selle, accompagné d'un moyen de serrage dudit moyen de fixation 2. Le moyen de fixation 2 sera donc sélectionné en fonction du diamètre du tube de selle, classiquement compris entre 25 et 32 mm.

Suivant une variante, on pourra prévoir un moyen de fixation 2 qui s'adapte à tous les diamètres de tube de selle existants. On pourra par exemple utiliser un V mobile actionné par une vis, le moyen de fixation 2 comprenant en outre une sangle entourant le tube de selle; l'action de la vis permettra alors de déplacer le V mobile pour adapter le moyen de fixation 2 au diamètre du tube de selle.

Dans tous les cas, le moyen de fixation 2 maintient un serrage suffisant pour maintenir solidement le présent accessoire 1 au tube de selle.

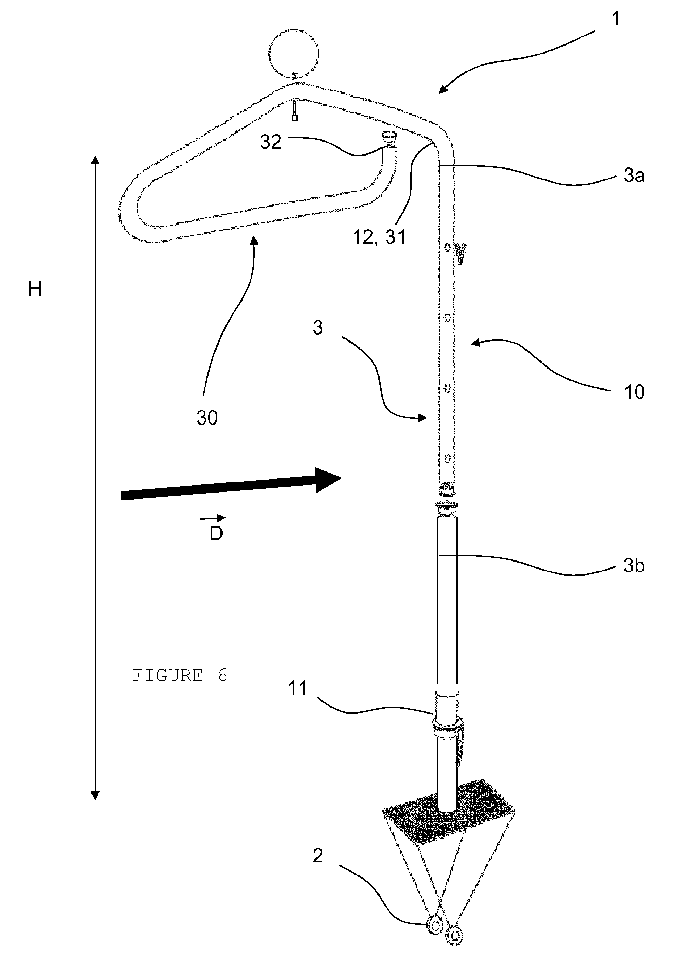

Suivant un autre mode de réalisation, le moyen de fixation 2 est destiné à coopérer avec un porte-bagage ou avec un essieu arrière d'une roue de bicyclette (figure 6).

Suivant cette variante, le moyen de fixation 2 coopère avec le porte bagage ou avec l'essieu de la roue semblablement à des moyens de fixation de porte-bagages connus de l'homme du métier.

Sur les figures 1 à 5, sont représentées des exemples d'accessoire 1 de bicyclette, dans lequels la tige 3 comprend :
- une première portion 10 comportant une extrémité 11 proximale adjacente au moyen de fixation 2 et une extrémité 12 distale distante du moyen de fixation 2, lesdites extrémités proximale et distale étant distantes l'une de l'autre d'une longueur L au moins égale à 250 mm,
- une deuxième portion 20 comportant une première extrémité 21 liée à ladite extrémité 12 distale et une deuxième extrémité 22 opposée à la première, ladite deuxième portion 20 s'étendant tout ou en partie perpendiculairement et verticalement par rapport à ladite première portion 10 sur une hauteur H au moins égale à 300 mm,
- une troisième portion 30 comportant une troisième extrémité 31 liée à la deuxième extrémité 22 et une quatrième extrémité 32 définissant l'extrémité terminale de ladite tige 3.

En position d'utilisation, dans les exemples de réalisation montrés sur les figures 1 à 5, la première portion 10 s'étend sensiblement parallèlement par rapport à la direction principale D de la bicyclette, en phase de roulage; la première portion 10 est donc sensiblement parallèle au sol.

Au contraire la deuxième portion 20 s'étend perpendiculairement à la première portion 10, c'est-à-dire perpendiculairement et verticalement par rapport à la direction générale de la bicyclette, en phase de roulage; la deuxième portion 20 est donc sensiblement perpendiculaire au sol.

En configuration d'utilisation, la première portion 10 s'étend sensiblement horizontalement tandis que la deuxième portion 20 s'étend sensiblement verticalement.

Dans un mode de réalisation montré sur les figures 1,2,3 et 5, la troisième portion 30 définit le moyen pour suspendre le vêtement, et présente a priori une forme de cintre.

Suivant un autre mode de réalisation montré sur la figure 6, est représenté un exemple d'accessoire 1 de bicyclette dans lequel la tige 3 comprend :
- une première portion 10 comportant une extrémité 11 proximale adjacente au moyen de fixation 2 et une extrémité 12 distale distante du moyen de fixation 2, lesdites extrémités proximale et distale étant distantes l'une de l'autre d'une longueur L au moins égale à 250 mm,
- une troisième portion 30 comportant une troisième extrémité 31 liée à l'extrémité 12 distale et une quatrième extrémité 32 définissant l'extrémité terminale de ladite tige 3, la troisième portion 30 définissant ladite forme de cintre.

Dans ce cas, la première portion 10 s'étend sensiblement perpendiculairement par rapport à la direction principale D de la bicyclette, en phase de roulage; la première portion 10 est donc sensiblement perpendiculaire au sol. En phase d'utilisation, la première portion 10 s'étend alors sensiblement verticalement.

Sur les figures 1 à 4, les première, deuxième et troisième portions 10,20,30 sont constitués de deux tiges 3a, 3b assemblées en une, en le milieu de la deuxième portion 20. Sur la figure 6, les première et troisième portions 10,30 sont constitués de deux tiges 3a,3b assemblées en une, en le milieu de la première portion 10. Dans tous les cas, le nombre de tiges 3 composant les première, deuxième et troisième portions 10,20,30, peuvent varier. Plus précisément, il est envisageable de prévoir des première et deuxième portions 20 définies respectivement par des première et seconde tiges 3 distinctes et assemblées à l'endroit de l'extrémité 12 proximale de la première portion 10 et de la première extrémité 21 de la deuxième portion 20.

Dans tous les cas, ladite au moins une tige 3 sélectionnée, doit remplir des critères liées à la destination de ladite tige 3 : elle doit être suffisamment solide pour ne pas se dégrader ou se déformer de manière anormale. A cet égard, il est a priori prévu que la tige 3 définisse un tube creux, classique.

Dans les modes de réalisation des exemples d'accessoire 1 montrés sur les figures 1 à 5, il peut être prévu que la première portion 10 soit télescopique. Dans ces conditions, la première portion 10 est constituée d'une tige 3 télescopique comportant a minima un tube de section supérieure et un tube de section inférieure, lesquels sont coaxiaux. En configuration déployée, le tube de section supérieure est dans le prolongement du tube de section inférieure, définissant alors une longueur L' relativement plus importante par rapport à une longueur L" en configuration retractée où le tube de section inférieure est logé à l'intérieur du tube de section supérieure. Il peut être prévu d'agencer une succession de tube de sectionss différentes dans le but de produire ce même effet: une configuration déployée et une configuration rétractée.

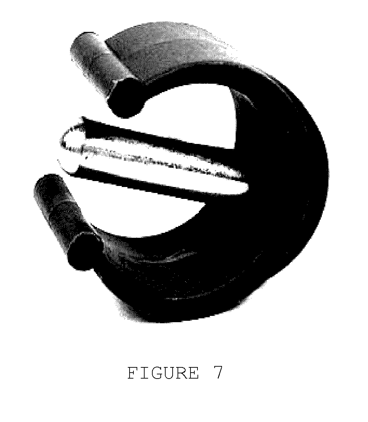

Pour maintenir les tubes en position déployée ou retracté un système de clavette ou de clips du même type que celui montré sur la figure 7 pourra être employé.

Dans un autre mode de réalisation des exemples d'accessoire 1 montrés sur les figures 1 à 5, la deuxième portion 20 est télescopique pour faire varier ladite hauteur H. Le mode de fonctionnement peut être analogue à celui ci-dessus mentionné. En outre, dans l'exemple d'accessoire 1 montré sur la figure 6, la première portion 10 est préférentiellement télescopique pour faire varier ladite hauteur H.

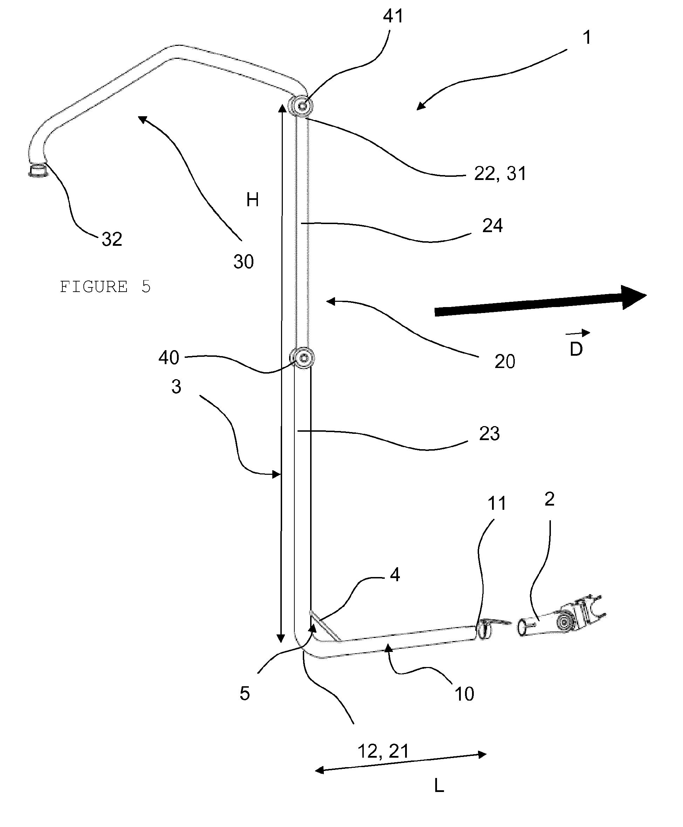

Suivant un autre mode de réalisation montré sur la figure 5, la deuxième portion 20 comprend au moins un premier et un second éléments 23,24 articulés entre eux par un premier moyen de rotation 40, ledit premier moyen de rotation 40 étant situé sensiblement au centre de ladite deuxième portion 20. Lesdites deuxième et troisième portions 20,30 sont articulés entre elles par un second moyen de rotation 41, à l'endroit des deuxième et troisième extrémités 22,31.

Des moyens de rotation peuvent être prévus à tous les endroits des première, deuxième et troisième portions 10,20,30, propres à définir une configuration rétractée dans laquelle l'encombrement de l'accessoire 1 est minimal.

Selon une variante montrée sur les exemples d'accessoires 1 des figures 1 à 5, l'accessoire 1 de bicyclette comprend en outre une tige secondaire 4 agencée entre lesdites première et deuxième portion 10,20, ladite tige secondaire 4 formant alors un angle sensiblement égale à 45° avec la première portion 10 d'une part et la deuxième portion 20 d'autre part. Comme on peut le voir, un évidement 5 est compris entre la tige secondaire 4 et la tige 3 considérée comme principale, ce qui permet avantageusement d'y glisser un câble antivol.

Préférentiellement, la tige 3, à l'endroit de son extrémité 11 proximale, est liée amoviblement au moyen de fixation 2. La tige 3 peut par exemple se loger dans le moyen de fixation 2 avant qu'un serrage circonférentiel ne soit opéré de sorte à maintenir solidairement la tige 3 et le moyen de fixation 2, en phase d'utilisation.

Sur les figures 1 à 6 sont représentées des accessoires 1 de bicyclette dont la géométrie de la troisième portion 3 et l'agencement de la troisième portion 20 par rapport la deuxième portion 20 (figures 1 à 5) ou par rapport à la première portion 10 (figure 6), diffèrent.

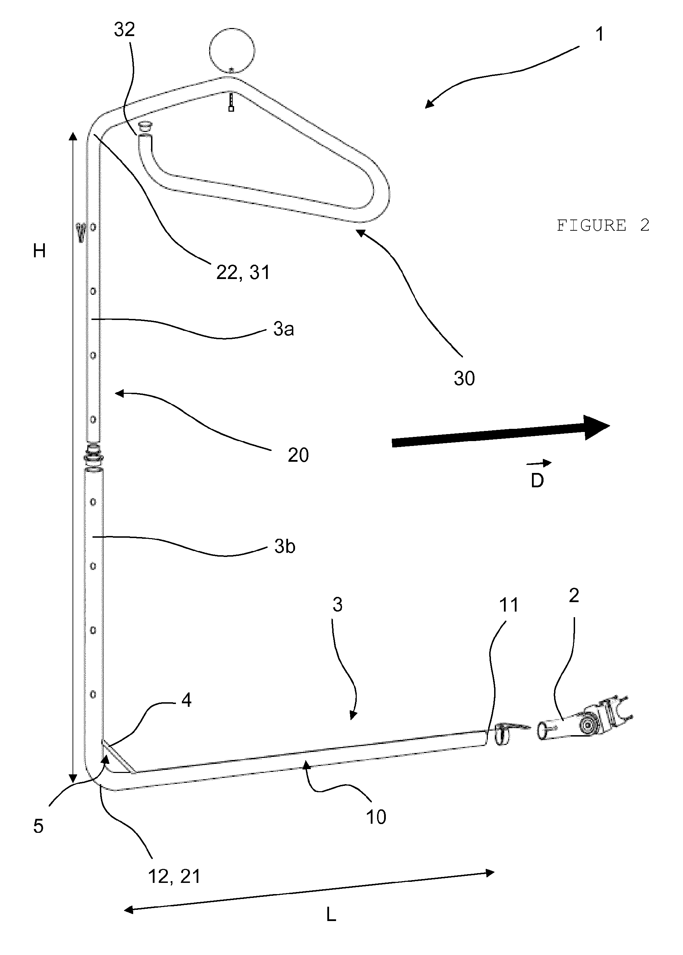

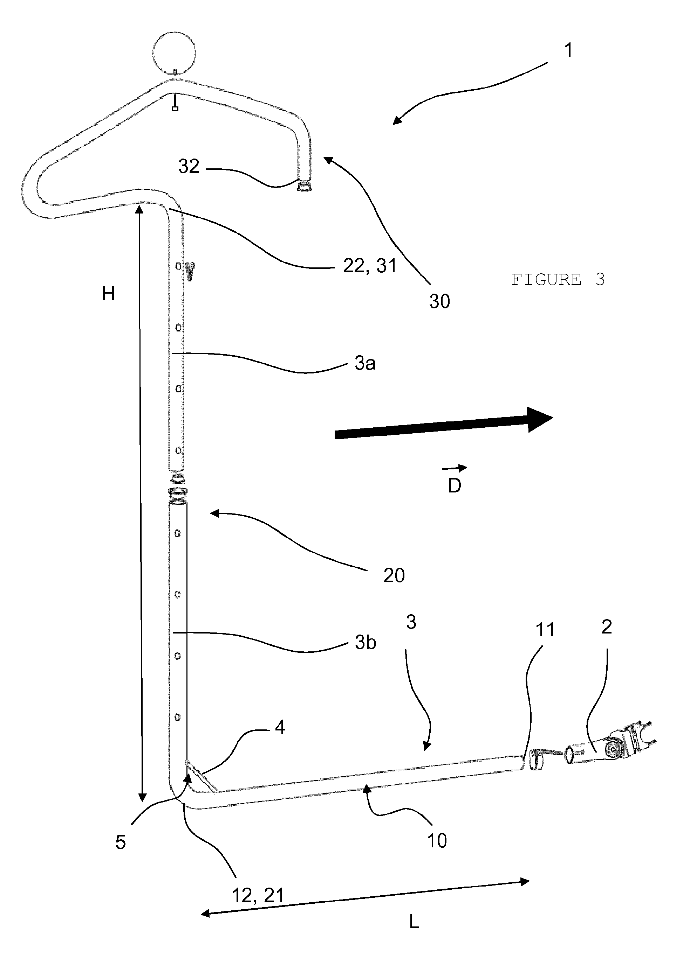

Figures 1,2,3 et 4, est montrée une troisième portion 30 connectée à la deuxième portion 20 à l'endroit de la troisième extrémité 31. La troisième portion comprend plusieurs tronçons, préférentiellement trois, définissant alors une forme de cintre connue de l'homme du métier. Cette troisième portion 30 s'étend dans un même plan vertical que le plan défini par les axes virtuelles des tiges des première et deuxième portions 10,20; pour le mode de réalisation représenté sur la figure 1, dans ce plan vertical, la troisième portion 30 s'étend du côté opposé où se situe la première portion 10; en dessous, en regard de la troisième portion 30, il n' y a donc pas de première portion 10. Pour le mode de réalisation représenté sur la figure 2, dans ce même plan vertical, la troisième portion 30 s'étend du même côté que la première portion 10; la troisième portion 30 s'étend alors au-dessus de la première portion 10, les première et troisième portions 10,30 sont alors en regard. Pour le mode de réalisation représenté sur la figure 3, la troisième portion 30 est raccordée à la deuxième portion 20 à l'endroit de la troisième extrémité 31, de sorte qu'une première partie de la troisième portion s'étend du côté opposé où se situe la première portion 10 et une seconde partie de cette même troisième portion 30 s'étend du même côté que la première portion 10, dans ce même plan vertical; en d'autres termes, en dessous, en regard de la première partie de la troisième portion 30, il n'y a pas de première portion 10, et, la seconde partie de la troisième portion 30 s'étend au-dessus de la première portion 10, en regard.

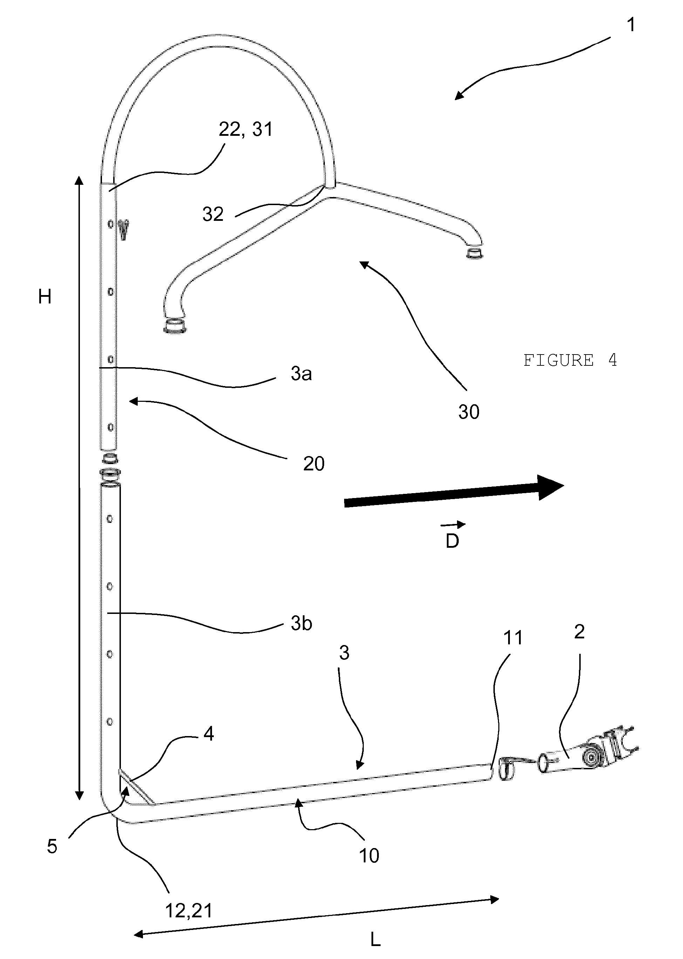

Figure 4, est montrée une troisième portion 30 incurvée et s'étendant vers le côté où se situe la première portion 10. A l'endroit de la quatrième extrémité 32, la troisième portion 30 est raccordée à deux bras symétriques l'un de l'autre par rapport à un axe vertical passant par la quatrième extrémité 32. La troisième portion 30 présente préférentiellement une forme de demi-cercle.

Figure 5, la troisième portion 30 peut définir des agencements tels que ceux montrés sur les figures 1,2 et 3.

Figure 6, la troisième portion 30 peut également définir des agencements tels que ceux montrés sur les figures 1,2 et 3, à la différence que la première portion 10 s'étend verticalement. La première portion 10 n'est donc pas en regard de la troisième portion 30.

Préférentiellement, pour les accessoires représentés sur les figures 1 à 4 et 6, la hauteur H est comprise entre 300 et 1500 mm, et de préférence entre 300 et 600 mm. En outre, l'accessoire représenté sur la figure 5 peut présenter en une version compact avec une hauteur H au moins égale à 300 mm et une version déployée avec une hauteur H au plus égale à 1500 mm.

Préférentiellement, pour les accessoires représentés sur les figures 1 à 5, la longueur L est comprise entre 200 et 500 mm.

Suivant un second objet, est également visé par la présente demande une bicyclette équipée d'un accessoire 1 pour suspendre un vêtement du type susmentionné.

## Revendications

1. Accessoire (1) de bicyclette comprenant un moyen de fixation (2) pour fixer ledit accessoire (1) à ladite bicyclette, ledit moyen de fixation (2) étant solidiaire d'au moins une tige (3) laquelle forme un moyen pour suspendre un vêtement, **caractérisé en ce que** ledit moyen de fixation (2) est destiné à être fixé à l'arrière de la bicyclette,

2. Accessoire (1) de bicyclette selon la revendication 1, **caractérisé en ce que** le moyen de fixation (2) est destiné à coopérer avec un tube de selle.

3. Accessoire (1) de bicyclette selon la revendication 1, **caractérisé en ce que** le moyen de fixation (2) est destiné à coopérer avec un porte-bagage ou un essieu arrière.

4. Accessoire (1) de bicyclette selon la revendication 2, **caractérisé en ce que** la tige (3) comprend :
- une première portion (10) comportant une extrémité (11) proximale adjacente au moyen de fixation (2) et une extrémité (12) distale distante du moyen de fixation (2), lesdites extrémités proximale et distale étant distantes l'une de l'autre d'une longueur (L) au moins égale à 250 mm,
- une deuxième portion (20) comportant une première extrémité (21) liée à ladite extrémité (12) distale et une deuxième extrémité (22) opposée à la première, ladite deuxième portion (20) s'étendant tout ou en partie perpendiculairement et verticalement par rapport à ladite première portion (10) sur une hauteur (H) au moins égale à 300 mm,
- une troisième portion (30) comportant une troisième extrémité (31) liée à la deuxième extrémité (22) et une quatrième extrémité (32) définissant l'extrémité terminale de ladite tige (3).

5. Accessoire (1) de bicyclette selon la revendication 3, **caractérisé en ce que** la tige (3) comprend :
- une première portion (10) comportant une extrémité (11) proximale adjacente au moyen de fixation (2) et une extrémité (12) distale distante du moyen de fixation (2), lesdites extrémités proximale et distale étant distantes l'une de l'autre d'une longueur (L) au moins égale à 300 mm,
- une troisième portion (30) comportant une troisième extrémité (31) liée à l'extrémité (12) distale et une quatrième extrémité (32) définissant l'extrémité terminale de ladite tige (3), la troisième portion (30) définissant ladite forme de cintre.

6. Accessoire (1) de bicyclette selon la revendication 4, **caractérisé en ce que** la troisième portion (30) définit ladite forme de cintre.

7. Accessoire (1) de bicyclette selon l'une quelconque des revendications 4 ou 5, **caractérisé en ce que** la première portion (10) est télescopique pour faire varier ladite longueur (L).

8. Accessoire (1) de bicyclette selon l'une quelconque des revendications 4 à 6, **caractérisé en ce que** la deuxième portion (20) est télescopique pour faire varier ladite hauteur (H).

9. Accessoire (1) de bicyclette selon l'une des revendications 4 à 7, **caractérisé en ce que** :
- la deuxième portion (20) comprend au moins un premier et un second éléments (23,24) articulés entre eux par un premier moyen de rotation (40), ledit premier moyen de rotation (40) étant situé sensiblement au centre de ladite deuxième portion (20),
- lesdites deuxième et troisième portions (20,30) sont articulés entre elles par un second moyen de rotation (41), à l'endroit des deuxième et troisième extrémités (22,31).

10. Accessoire (1) de bicyclette selon l'une quelconque des revendications précédentes, **caractérisé en ce qu'**une tige secondaire (4) est agencée entre lesdites première et deuxième portions (10,20), ladite tige secondaire (4) formant alors un angle sensiblement égale à 45° avec la première portion (10) d'une part et la deuxième portion (20) d'autre part.

11. Accessoire (1) de bicyclette selon l'une quelconque des revendications précédentes, **caractérisé en ce que** la tige (3) est liée amoviblement au moyen de fixation (2).
